# EUROPÄISCHE PATENTSCHRIFT

(11) **EP 0 570 737 B1**
(45) Veröffentlichungstag und Bekanntmachung des Hinweises auf die Patenterteilung: **19.07.1995**
(21) Anmeldenummer: 93107020.5
(22) Anmeldetag: 30.04.1993
(51) Int. Cl.: B62B 3/10

(54) **Einkaufswagen**
Shopping cart
Chariot d'achat

(30) Priorität: 21.05.1992 DE 4216813
(43) Veröffentlichungstag der Anmeldung: 24.11.1993
(73) Patentinhaber: Brüder Siegel GmbH + Co. KG Draht- und Metallwarenfabrik, 89336 Leipheim (DE)
(72) Erfinder: Polidar, Franz, D-8872 Burgau (DE); Kugler, Rudolf, 8876 Jettingen-Scheppach/OT Schönenberg (DE)
(74) Vertreter: Grättinger & Partner (GbR)

(56) Entgegenhaltungen:
- US-A- 3 023 018
- US-A- 4 682 782

## Beschreibung

Die vorliegende Erfindung betrifft einen Einkaufswagen, in dessen Rückwand ein wahlweise aktivierbarer, in ein Ablagefach umfunktionierbarer Kindersitz mit einer Sitzfläche und einer schwenkbar an der Rückwand angelenkten Rückenlehne integriert ist, wobei die Rückwand zwei mittels einer Abdeckung abdeckbare Beinlöcher aufweist und die Breite der Sitzfläche geringer ist als die Breite der Rückwand.

Ein derartiger Einkaufswagen ist beispielsweise aus der US-PS 4 046 394 bekannt. "Wahlweise aktivierbar" bedeutet dabei, daß der Kindersitz - und das aus ihm ggf. hervorgehende Ablagefach - bei Bedarf in Funktion gesetzt werden kann; besteht kein Bedarf, so kann er "deaktiviert" werden, um das Fassungsvermögen und die Stapelbarkeit des Einkaufswagens nicht zu beeinträchtigen. Hierzu wird die um eine horizontale Achse schwenkbar an der Rückwand des Einkaufswagens angelenkte Rückenlehne des Kindersitzes in dessen deaktiviertem Zustand gegen die Rückwand geklappt. Die Sitzfläche ist an der Rückwand des Einkaufswagens ebenfalls um eine horizontale Achse schwenkbar angelenkt und liegt bei deaktiviertem Kindersitz ebenfalls an der Rückwand des Einkaufswagens an.

Bei dem bekannten Einkaufswagen ist die Sitzfläche des Kindersitzes in der Weise schwenkbar an der Rückwand des Einkaufswagens angelenkt, daß sie zugleich die Abdeckung für die Beinlöcher bildet, d. h. daß sie die Beinlöcher in der Rückwand abdeckt, wenn sie bei aktiviertem Kindersitz zur Herstellung (=Aktivierung) eines Ablagefaches in eine hochgeklappte, an der Rückwand anliegende Stellung gebracht wird. Es ist ferner eine an der Rückenlehne des Kindersitzes schwenkbar angelenkte Ablagefläche, deren Breite geringer ist als die lichte Weite des Einkaufswagens, vorgesehen, welche unmittelbar unterhalb der Sitzfläche in ihrer heruntergeklapppten Stellung angeordnet ist. Durch Hochklappen der Sitzfläche läßt sich der Kindersitz in ein Ablagefach für Kleinwaren umgestalten, welches nach hinten durch die Rückwand des Einkaufswagens und die hochgeklappte Sitzfläche des Kindersitzes, nach vorne durch die Rückenlehne des Kindersitzes und nach unten durch die Ablagefläche begrenzt wird.

Aus der US-PS 2 890 057 ist ein ähnlich aufgebauter Einkaufswagen bekannt. Bei ihm entspricht die Breite der Sitzfläche des Kindersitzes und der Ablagefläche jedoch im wesentlichen der Breite der Rückwand; und die Ablagefläche ist nicht an der Rückenlehne, sondern vielmehr an der Rückwand schwenkbar angelenkt.

Der bekannte Einkaufswagen gemäß der gattungsbildenden US-PS 4 046 394 besitzt insbesondere den Nachteil, daß, weil die Ablagefläche schmaler ist als der Einkaufswagen breit, der Boden des aus dem Kindersitz hervorgehenden Ablagefaches auf beiden Seiten der Ablagefläche zwischen dieser und den Seitenwänden des Einkaufswagens jeweils einen Spalt besitzt, durch den kleine Gegenstände hindurchfallen können. Ist hingegen, wie bei der US-PS 2 890 057, die Ablagefläche der Gesamtbreite des Einkaufswagens entsprechend ausgebildet, so können seitlich des in dem Kindersitz sitzenden Kindes noch Waren abgelegt werden, was aus verschiedenen Gründen unerwünscht ist (z.B. Verletzungsgefahr).

Der vorliegenden Erfindung liegt somit die Aufgabe zugrunde, einen gattungsgemäßen Einkaufswagen zu schaffen, bei dem das aus dem Kindersitz herstellbare Ablagefach ohne die Ausbildung von randseitigen Spalten benachbart den Seitenwänden des Einkaufswagens über die Gesamtbreite des Einkaufswagens nach unten hin abgeschlossen ist, ohne daß jedoch die Möglichkeit besteht, neben einem in dem Kindersitz aufgenommenen Kind Waren abzulegen.

Gemäß der Erfindung wird diese Aufgabe dadurch gelöst, daß mindestens ein Bodenelement vorgesehen ist, das bei aktiviertem Kindersitz zwischen einer ersten Stellung, in welcher es den Spalt zwischen der Sitzfläche des Kindersitzes und einer Seitenwand des Einkaufswagens freigibt, und einer zweiten Stellung, in der es den Spalt zwischen der Sitzfläche und/oder einer ggf. vorgesehenen Ablagefläche einerseits und der entsprechenden Seitenwand des Einkaufswagens andererseits im wesentlichen ausfüllt, lageveränderbar aufgehängt ist.

Die Erfindung ist in gleicher Weise auf Einkaufswagen mit symmetrisch und mit asymmetrisch angeordneter Sitzfläche anwendbar, d.h. sowohl bei Einkaufswagen, bei denen auf beiden Seiten der Sitzfläche zwischen dieser und den Seitenwänden des Einkaufswagens ein Spalt besteht, als auch bei solchen Einkaufswagen, bei denen infolge asymmetrischer Anordnung der Sitzfläche nur auf einer Seite neben dieser ein Spalt vorhanden ist. Nachdem üblicherweise die Sitzflächen symmetrisch angeordnet sind, wird im folgenden die Erfindung anhand derartiger Einkaufswagen erläutert, d.h. solchen Einkaufswagen, bei denen zwei Bodenelemente vorgesehen sind. Der beantragte Schutz wird hierdurch jedoch nicht auf derartige Einkaufwagen eingeschränkt.

Für die Anlenkung der Bodenelemente besteht eine Mehrzahl von Möglichkeiten, je nach Konstruktion des Einkaufswagens. Bei einem Einkaufswagen des in der US-Patentschrift 4 046 394 dargestellten grundsätzlichen Aufbaus können die Bodenelemente insbesondere an der Rückwand des Einkaufswagens oder der Rückenlehne des Kindersitzes um eine horizontale Achse schwenkbar angelenkt sein; jedoch kommt auch eine schwenkbare Anlenkung an den Seitenwänden des Einkaufswagens in Betracht. Werden die Beinlöcher in der Rückwand, wie im Falle der US-Patentschrift 4046394 bei aktiviertem Ablagefach durch die hochgeschwenkte Sitzfläche des Kindersitzes abgedeckt, so sind die Bodenelemente bei aktiviertem Ablagefach zweckmäßigerweise niveaugleich mit der Ablagefläche angeordnet, so daß ein durchgehender, aus der Ablagefläche und den beiden Bodenelementen gebildeter Boden entsteht.

Bei einer bevorzugten Weiterbildung des erfindungsgemäßen Einkaufswagens ist demgegenüber vorgesehen, daß die Beinlöcher in der Rückwand bei aktiviertem Ablagefach nicht durch die hochgeklappte Sitzfläche des Kindersitzes abgedeckt werden, sondern vielmehr durch eine gesonderte Abdeckung. Bei dieser Ausgestaltung des Einkaufswagens dient die Sitzfläche des Kindersitzes bei aktiviertem Ablagefach als dessen Boden. In diesem Falle sind die beiden Bodenelemente bei aktiviertem Ablagefach zweckmäßigerweise niveaugleich mit der Sitzfläche des Kindersitzes angeordnet, so daß ein durchgehender, aus den beiden Bodenelementen und der Sitzfläche des Kindersitzes gebildeter Boden für das Ablagefach entsteht. Bei einem derartigen Einkaufswagen wird das aus dem Kindersitz hervorgehende Ablagefach nach hinten durch die Rückwand des Einkaufswagens und die Abdeckung für die Beinlöcher, nach unten durch die Sitzfläche des Kindersitzes und die beiden Bodenelemente, nach vorne durch die Rückenlehne des Kindersitzes und an den Seiten durch die beiden Seitenwände des Einkaufswagens dicht abschließend begrenzt. Diese Ausgestaltung des erfindungsgemäßen Einkaufswagens besitzt den weiteren Vorteil, daß dem Inneren des Ablagefaches die glatte, leicht zu reinigende Oberseite der Sitzfläche des Kindersitzes zugewandt ist; bei den bekannten gattungsgemäßen Einkaufswagen ist demgegenüber die Unterseite der Sitzfläche des Kindersitzes dem Inneren des aktivierten Ablagefaches zugewandt, was insbesondere in dem Fall, daß in dem Ablagefach offene Lebensmittel transportiert werden sollen, zu Hygieneproblemen führen kann, nachdem die Unterseite der Sitzfläche erfahrungsgemäß selten gereinigt wird und zudem das Ansammeln von Schmutz auf dieser Fläche durch die dort im allgemeinen vorgesehenen Versteifungsrippen begünstigt wird.

Bei einem Einkaufswagen des in der US-Patentschrift 4 046 394 offenbarten Typs, bei dem die Beinlöcher in der Rückwand des Einkaufswagens bei aktiviertem Ablagefach durch die hochgeschwenkte Sitzfläche des Kindersitzes abgedeckt werden, sind die beiden Bodenelemente zweckmäßigerweise in der Weise mit der Sitzfläche mechanisch gekoppelt, daß sie bei Aktivierung des Ablagefaches durch Verschwenken der Sitzfläche von ihrer ersten, die Spalte freigebenden in ihre zweite, die Spalte abdeckende Stellung gebracht werden. Bei der bevorzugten Ausgestaltung des erfindungsgemäßen Einkaufswagens, die über eine gesonderte Abdeckung für die Beinlöcher verfügt, sind die beiden Bodenelemente zweckmäßigerweise mit dieser Abdeckung in der Weise mechanisch gekoppelt, daß sie bei der Aktivierung des Ablagefaches zwangsläufig von ihrer ersten in ihre zweite Stellung gebracht werden.

Die bei der letztgenannten bevorzugten Ausgestaltung der Erfindung vorgesehene gesonderte Abdeckung für die Beinlöcher ist zweckmäßigerweise um eine horizontale Achse verschwenkbar an der Rückwand des Einkaufswagens angelenkt und kann somit mit einem einzigen Handgriff vor die Beinlöcher geschwenkt werden, wenn der aktivierte Kindersitz in ein Ablagefach umfunktioniert werden soll. Besonders vorteilhaft ist es dabei, wenn die Abdeckung für die Beinlöcher und die Rückenlehne des Kindersitzes an der Rückwand des Einkaufswagens im wesentlichen um die selbe Achse verschwenkbar angelenkt sind. Die Abdeckung kann in diesem Falle zwischen einer ersten, an der Rückenlehne des Kindersitzes anliegenden und einer zweiten, an der Rückwand des Einkaufswagens anliegenden Stellung verschwenkt werden. Die Rückenstütze für ein in dem Kindersitz sitzendes Kind wird dabei durch die bekannte Rückenlehne und die an diese herangeklappte Abdeckung für die Beinlöcher gebildet.

In dem Falle, daß die Abdeckung für die Beinlöcher an der Rückwand des Einkaufswagens im wesentlichen um die selbe Achse verschwenkbar angelenkt ist wie die Rückenlehne des Kindersitzes, ist die schwenkbare Anlenkung der Bodenelemente an der Rückenlehne des Kindersitzes besonders zweckmäßig. Die der jeweiligen Schwenkachse gegenüberliegenden Kanten der Bodenelemente sind in diesem Falle zweckmäßigerweise an der Abdeckung für die Beinlöcher in der Weise geführt, daß sie beim Verschwenken der Abdeckung für die Beinlöcher von der Rückenlehne in Richtung auf die Rückwand an der Abdeckung entlang gleiten, so daß die Bodenelemente in ihre mit der Sitzfläche des Kindersitzes ausgerichtete Position verschwenkt werden. Jedoch kann auch die umgekehrte Anlenkung der Bodenelemente vorgesehen sein, indem sie schwenkbar an der Abdeckung für die Beinlöcher aufgehängt und mit ihren gegenüberliegenden Kanten an der Rückenlehne des Kindersitzes geführt sind. In beiden Fällen ist es durch einen einfachen Handgriff möglich, die Umfunktionierung des Kindersitzes zum Ablagefach vorzunehmen.

Ersichtlich ist es für die Erfindung ohne Bedeutung, ob die Sitzfläche an der Rückwand des Behälters oder aber an der Rückenlehne des Kindersitzes schwenkbar angelenkt ist.

Im folgenden wird ein Ausführungsbeispiel der Erfindung anhand der Zeichnung näher erläutert. Es zeigt
- Fig. 1: eine schematische Seitenansicht eines erfindungsgemäßen Einkaufswagens mit aktiviertem Kindersitz,
- Fig. 2: eine schematische Seitenansicht des Einkaufswagens gemäß Fig. 1 mit aus dem aktivierten Kindersitz hergestelltem Ablagefach für Kleinwaren und
- Fig. 3: eine schematische Seitenansicht des Einkaufswagens gemäß Fig. 1, wobei sich die Abdeckung für die Beinlöcher in einer Zwischenstellung zwischen den Fig. 1 und 2 befindet.

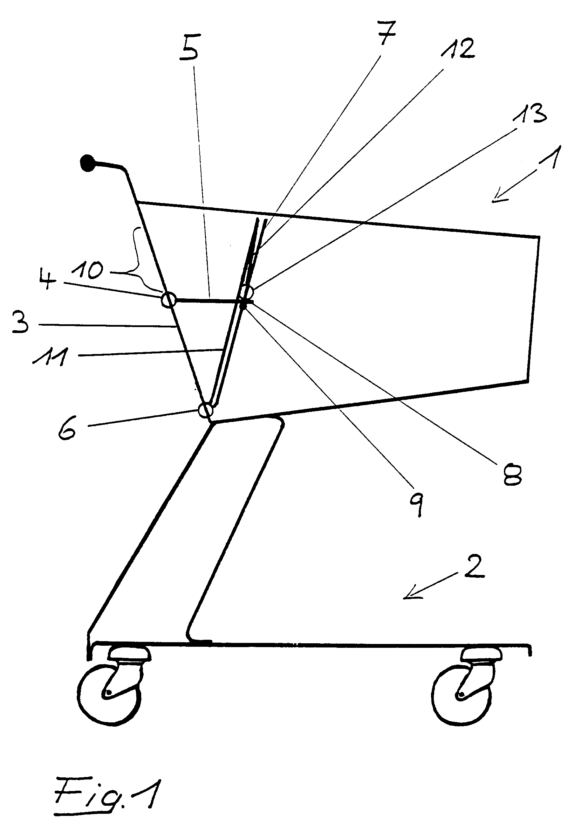

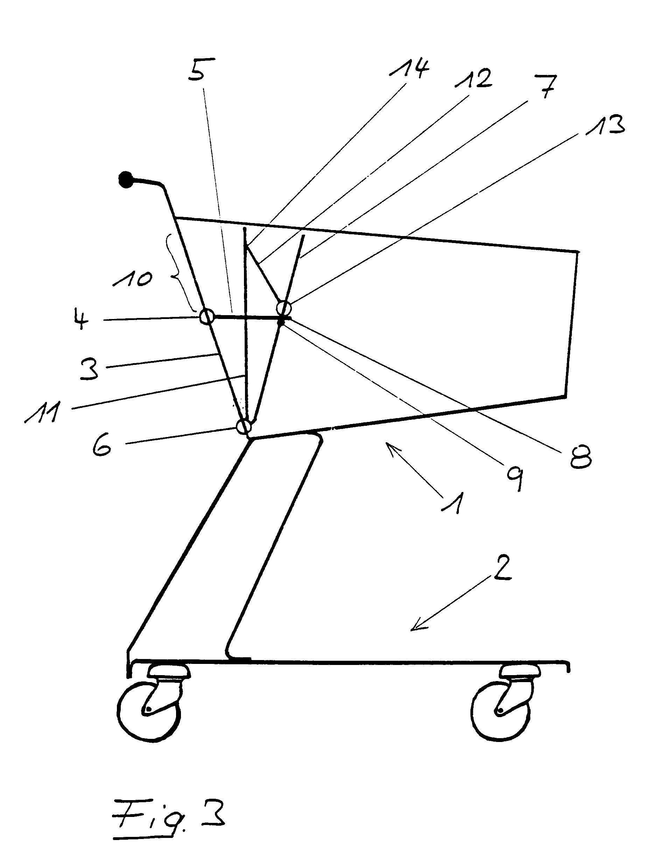

Der grundsätzliche Aufbau des Einkaufswagens gemäß den Fig. 1 bis 3 entspricht dem Stand der Technik. Dementsprechend ist ein Einkaufskorb 1 auf ein Fahrgestell 2 aufgesetzt. Die Rückwand 3 des Einkaufswagens ist in ihrem oberen Abschnitt um eine horizontale Achse verschwenkbar aufgehängt, so daß sie nach oben verschwenkt werden kann, wenn mehrere Einkaufswagen gestapelt werden sollen.

Ebenfalls im Stand der Technik bekannt ist die um eine horizontale Achse 4 schwenkbare Anlenkung einer Sitzfläche 5 eines Kindersitzes an der Rückwand 3, sowie die um eine weitere horizontale Achse 6 schwenkbare Anlenkung einer Rückenlehne 7 eines Kindersitzes an der Rückwand 3. Mit seinem freien Ende 8 liegt die Sitzfläche 5 auf einer an der Rückenlehne 7 angeordneten Auflage 9 auf; hierdurch klappt die Sitzfläche 5, wenn die Rückenlehne 7 gegen die Rückwand 3 geklappt wird, selbsttätig nach unten, so daß bei deaktiviertem Kindersitz die Rückwand 3, die Rückenlehne 7 sowie die Sitzfläche 5 raumsparend aneinander anliegen. In der Rückwand 3 sind in dem Bereich 10 oberhalb der Sitzfläche 5 zwei - in der Seitenansicht nicht erkennbare - Beinlöcher vorgesehen. Nachdem insoweit der Einkaufswagen gemäß den Fig. 1 bis 3 entsprechend dem Stand der Technik aufgebaut ist, kann auf detailliertere Erläuterungen verzichtet werden.

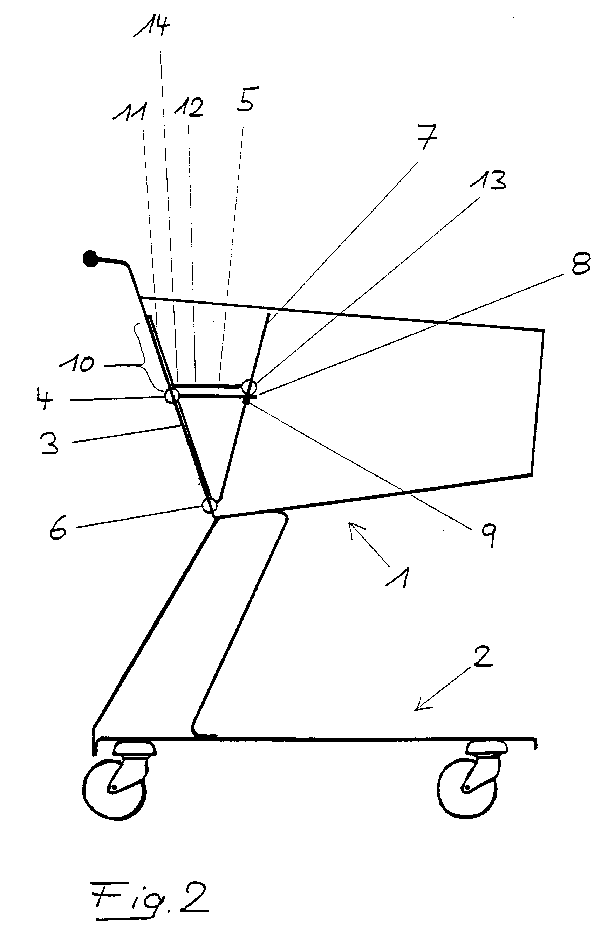

Um die selbe Achse 6 wie die Rückenlehne 7 ist an der Rückwand 3 eine Abdeckung 11 verschwenkbar angelenkt. Die Abdeckung 11 ist mindestens so breit, daß sie die Beinlöcher in der Rückwand 3 abdeckt, wenn sie gegen die Rückwand geschwenkt ist (Fig. 2). Der Aufbau der Abdeckung ist dabei derart, daß sie in ihrem oberen, oberhalb der Sitzfläche 5 liegenden Bereich ein Gitter umfaßt, welches an zwei seitlich an der Sitzfläche 5 des Kindersitzes nach unten, zu der Schwenkachse 6 geführten Streben befestigt ist. Auf diese Weise kann die Abdeckung 11, wie in den Fig. 1 bis 3 dargestellt, ungehindert zwischen einer an der Rückwand 7 des Kindersitzes anliegenden Position (Fig. 1) und einer an der Rückwand 3 des Einkaufswagens anliegenden Position (Fig. 2) verschwenkt werden.

Bei dem in den Fig. 1 bis 3 dargestellten Einkaufswagen ist die Sitzfläche 5 erheblich schmaler als die Rückwand 3 breit ist. Dadurch entstehen auf beiden Seiten der Sitzfläche 5 zwischen dieser und den benachbarten Seitenwänden des Einkaufswagens Spalte. Zur Abdeckung dieser Spalte sind zwei Bodenelemente 12 vorgesehen, welche um eine gemeinsame horizontale Achse 13 schwenkbar an der Rückenlehne 7 angelenkt sind. Es wird darauf hingewiesen, daß nur aus Gründen der Übersichtlichkeit die Bodenelemente 12 als höher als die Sitzfläche 5 angeordnet dargestellt sind. Bei einer praktisch-technischen Realisierung des Einkaufswagens gemäß den Fig. 1 bis 3 sind die Bodenelemente 12 hingegen niveaugleich mit der Sitzfläche 5 angeordnet, d.h. die Schwenkachse 13 ist gegenüber der in der Zeichnung dargestellten Position nach unten versetzt.

Das freie Ende 14 beider Bodenelemente 12 ist an der Abdeckung 11 verschieblich geführt, so daß es beim Verschwenken der Abdeckung 11 beim Übergang von der Kindersitz-Stellung (Fig. 1) zur Ablagefach-Stellung (Fig. 2) an der Abdeckung nach unten gleitet, und beim Übergang von der Ablagefach-Stellung in die Kindersitz-Stellung nach oben.

Beim Einkaufswagen gemäß den Fig. 1 bis 3 wird somit das Ablagefach (Fig. 2) nach hinten begrenzt durch die Rückwand 3 und die Abdeckung 11, nach unten durch die Sitzfläche 5 und die Bodenelemente 12 und nach vorne durch die Rückenlehne 7; in der Kindersitz-Stellung (Fig. 1) lehnt sich ein auf der Sitzfläche 5 sitzendes Kind an der an der Rückenlehne 7 anliegenden Abdeckung 11 an.

## Patentansprüche

1. Einkaufswagen, in dessen Rückwand (3) ein wahlweise aktivierbarer, in ein Ablagefach umfunktionierbarer Kindersitz mit einer Sitzfläche (5) und einer schwenkbar an der Rückwand (3) angelenkten Rückenlehne (7) integriert ist, wobei die Rückwand (3) zwei mittels einer Abdeckung abdeckbare Beinlöcher aufweist und die Breite der Sitzfläche (5) geringer ist als die Breite der Rückwand (3),
dadurch gekennzeichnet,
daß mindestens ein Bodenelement (12) vorgesehen ist, das bei aktiviertem Kindersitz zwischen einer ersten Stellung, in welcher es den Spalt zwischen der Sitzfläche (5) und einer Seitenwand des Einkaufswagens freigibt, und einer zweiten Stellung, in welcher es den Spalt zwischen der Sitzfläche und/oder einer ggf. vorgesehenen Ablagefläche einerseits und der entsprechenden Seitenwand des Einkaufswagens andererseits im wesentlichen ausfüllt, lageveränderbar aufgehängt ist.

2. Einkaufswagen nach Anspruch 1,
dadurch gekennzeichnet,
daß das Bodenelement/die Bodenelemente (12) mit der Abdeckung für die Beinlöcher, insbesondere der Sitzfläche des Kindersitzes oder einer gesonderten Abdeckung (11) in der Weise mechanisch gekoppelt ist/sind, daß es/sie beim Aktivieren des Ablagefaches selbsttätig in ihre zweite, den Spalt/die Spalte abdeckende Stellung bewegt wird/werden.

3. Einkaufswagen nach Anspruch 1 oder Anspruch 2,
dadurch gekennzeichnet,
daß das Bodenelement/die Bodenelemente (12) um eine horizontale Achse (13) schwenkbar an der Rückenlehne (7) des Kindersitzes angelenkt ist/sind.

4. Einkaufswagen nach einem der Ansprüche 1 bis 3,
dadurch gekennzeichnet,
daß eine von der Sitzfläche (5) des Kindersitzes verschiedene Abdeckung (11) vorgesehen ist, mittels welcher bei aktiviertem Kindersitz zur Aktivierung des Ablagefaches die Beinlöcher abgedeckt werden können.

5. Einkaufswagen nach Anspruch 4,
dadurch gekennzeichnet,
daß die Abdeckung (11) um eine horizontale Achse (6) verschwenkbar an der Rückwand (3) angelenkt ist.

6. Einkaufswagen nach Anspruch 5,
dadurch gekennzeichnet,
daß die Abdeckung (11) zwischen einer an der Rückenlehne (7) anliegenden und einer an der Rückwand (3) anliegenden Stellung verschwenkt werden kann.

7. Einkaufswagen nach Anspruch 2, 3 und 6,
dadurch gekennzeichnet,
daß das Bodenelement/die Bodenelemente (12) an Seiner/ihren der Schwenkachse (13) gegenüberliegenden freien Kante(n) (14) in der Weise an der Abdeckung (11) geführt ist/sind, daß es/sie in seine/ihre den Spalt/die Spalte zwischen der Sitzfläche (5) und der entsprechenden Seitenwand/den Seitenwänden des Einkaufswagens ausfüllende Stellung verschwenkt werden, wenn die Abdeckung (11) in ihre die Beinlöcher abdeckende Stellung gebracht wird.

8. Einkaufswagen nach Anspruch 1,
dadurch gekennzeichnet,
daß die Sitzfläche (5) des Kindersitzes um eine horizontale Achse (4) schwenkbar an der Rückwand (3) angelenkt ist.

## Claims

1. Shopping trolley, in the rear wall (3) of which is integrated a child seat able to be activated optionally and able to be converted into a storage compartment, with a seat surface (5) and a back rest (7) pivoting on the rear wall (3), the rear wall (3) comprising two leg holes able to be covered by means of a cover and the width of the seat surface (5) being less than the width of the rear wall (3), characterised in that at least one bottom member (12) is provided, which when the child seat is activated is suspended so that it is able to vary its position between a first position, in which it clears the gap between the seat surface (5) and a side wall of the shopping trolley, and a second position, in which it substantially fills the gap between the seat surface and/or a storage surface possibly provided, on one side, and the corresponding side wall of the shopping trolley on the other side.

2. Shopping trolley according to Claim 1, characterised in that the bottom member/the bottom members (12) is/are mechanically connected to the cover for the leg holes, in particular the seat surface of the child seat or a separate cover (11) in such a way that it/they is/are moved automatically into their second position covering the gap/gaps when the storage compartment is activated.

3. Shopping trolley according to Claim 1 or Claim 2, characterised in that the bottom member/the bottom members (12) is/are pivoted about a horizontal pivot (13) on the back rest (7) of the child seat.

4. Shopping trolley according to one of Claims 1 to 3, characterised in that a cover (11) is provided separate from the seat surface (5) of the child seat, by means of which the leg holes can be covered for the activation of the storage compartment, when the child seat is activated.

5. Shopping trolley according to Claim 4, characterised in that the cover (11) is pivoted on the rear wall (3) to tilt about a horizontal pivot (6).

6. Shopping trolley according to Claim 5, characterised in that the cover (11) can be tilted between a position bearing against the back rest (7) and a position bearing against the rear wall (3).

7. Shopping trolley according to Claim 2, 3 and 6, characterised in that the bottom member/the bottom members (12) is/are guided on its/their free edge(s) (14) lying opposite the pivot (13), on the cover (11) in such a way that it/they are tilted into its/their position filling the gap/gaps between the seat surface (5) and the corresponding side wall/side walls of the shopping trolley, when the cover (11) is brought into its position covering the leg holes.

8. Shopping trolley according to Claim 1, characterised in that the seat surface (5) of the child seat is hinged on the rear wall (3) to tilt about a horizontal pivot (4).

## Revendications

1. Chariot pour achats, dans la paroi arrière (3) duquel est intégré un siège pour enfant, qui peut être actionné au choix et qui peut être rabattu dans un casier de rangement et comportant une surface (5) du siège et un dossier (7) articulé de manière à pouvoir pivoter sur la paroi arrière (3), la paroi arrière (3) possédant deux trous pour le passage des jambes, qui peuvent être fermés au moyen d'un élément de revêtement, tandis que la largeur de la surface (5) du siège est inférieure à la largeur de la paroi arrière (3),
caractérisé par le fait qu'il est prévu au moins un élément de fond (12), qui, lorsque le siège pour l'enfant est actionné, est suspendu dans une position variable, entre une première position, dans laquelle il libère la fente située entre la surface (5) du siège et une paroi latérale du chariot pour achats, et une seconde position, dans laquelle il remplit pour l'essentiel la fente présente entre la surface du siège et/ou une surface d'appui éventuellement prévue, d'une part, et la paroi intérieure correspondante du chariot pour achats, d'autre part.

2. Chariot pour achats suivant la revendication 1, caractérisé par le fait que l'élément de fond et/ou les éléments de fond (12) est/sont accouplé(s) mécaniquement aux éléments de revêtement destinés à fermer les trous de passage pour les jambes, notamment à la surface du siège de l'enfant ou un élément de revêtement particulier (11), de telle sorte que le ou les éléments de fond est/sont amené(s) automatiquement, lors de l'actionnement du casier de dépôt, dans leur seconde position dans laquelle il(s) ferme(nt) la/les fentes.

3. Chariot pour achats suivant la revendication 1 ou 2, caractérisé en ce que l'élément de fond/les éléments de fond (12) est/sont articulé(s) sur le dossier (7) du siège pour l'enfant de manière à pouvoir pivoter autour d'un axe horizontal (13).

4. Chariot pour achats suivant l'une des revendications 1 à 3, caractérisé en ce qu'il est prévu un élément de revêtement (11) qui est différent de la surface (5) du siège pour enfant et au moyen duquel, lors du déploiement du siège pour enfant, les trous de passage des jambes peuvent être recouverts par actionnement du casier de dépôt.

5. Chariot pour achats selon la revendication 4, caractérisé en ce que le revêtement (11) est articulé sur la paroi arrière (3) de manière à pouvoir basculer autour d'un axe horizontal (6).

6. Chariot pour achats selon la revendication 5, caractérisé en ce que l'élément de recouvrement (11) peut basculer entre une position, dans laquelle il est appliqué contre le dossier (7), et une position dans laquelle il est appliqué contre la paroi arrière (3).

7. Chariot pour achats selon les revendications 2, 3 et 6, caractérisé en ce que l'élément de fond/les éléments de fond (12) est/sont guidé(s) sur l'élément de recouvrement (11), au niveau de son/leurs bord(s) libre(s) (14) situé(s) à l'opposé de l'axe de basculement (13), de telle sorte qu'il(s) soient amené(s) par basculement dans sa/leur position(s), dans laquelle il(s) remplisse(ent) la fente/les fentes entre la surface (5) du siège et la/les paroi(s) latérale(s) correspondante(s), lorsque l'élément de revêtement (11) est amené dans sa position dans laquelle il recouvre les trous de passage pour les jambes.

8. Chariot pour achats selon la revendication 1, caractérisé en ce que la surface (5) du siège pour enfant est articulée sur la paroi arrière (3) de manière à pouvoir basculer autour d'un axe horizontal (4).
